(19) Europäisches Patentamt
European Patent Office
Office européen des brevets

(11) **EP 3 301 539 A1**

(12) **EUROPEAN PATENT APPLICATION**

(43) Date of publication:
**04.04.2018 Bulletin 2018/14**

(51) Int Cl.:
*G06F 1/16* (2006.01)     *H04M 1/02* (2006.01)

(21) Application number: **17173523.6**

(22) Date of filing: **30.05.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **28.09.2016   CN 201610860812**

(71) Applicant: **Beijing Xiaomi Mobile Software Co., Ltd.**
**Beijing 100085 (CN)**

(72) Inventors:
• **LI, Guosheng**
  **BEIJING, 100085 (CN)**
• **LIU, Anyu**
  **BEIJING, 100085 (CN)**
• **LIU, Shanrong**
  **BEIJING, 100085 (CN)**

(74) Representative: **Underwood, Nicolas Patrick et al**
**Cabinet Beau de Loménie**
**158, rue de l'Université**
**75340 Paris Cedex 07 (FR)**

(54) **ELECTRONIC DEVICE AND DISPLAY METHOD**

(57)    The present disclosure relates to an electronic device and a display method, and belongs to a field of electronic devices. The electronic device at least includes a display screen (201) and a bezel (202), the bezel (202) surrounds sides of the display screen (201); the display screen (201) includes four screen corners (2011) and the four screen corners (2011) are rounded; the bezel (202) includes four sides (2022; 2023; 2024; 2025), any one of the four sides (2022; 2023; 2024; 2025) intersects two of further three sides of the four sides (2022; 2023; 2024; 2025) respectively and is in parallel with another one of the further three sides to form four bezel corners (2021); the four bezel corners (2021) correspond to the four screen corners (2011) respectively, and the four bezel corners (2021) are rounded; and a distance (L) between vertexes (E; F) of the bezel corners (2021) and screen corners (2011) corresponding to each other is not less than a preset distance.

Fig. 2A

EP 3 301 539 A1

Description

TECHNICAL FIELD

The present invention relates to a field of electronic devices, and more particularly, to an electronic device and a display method.

BACKGROUND

With the continuous development of electronic technology, electronic devices such as mobile phones and tablet PCs are widely used in people's daily lives. When selecting an electronic device, a user may pay more and more attention to the structure of the electronic device in addition to the functions provided by the electronic device.

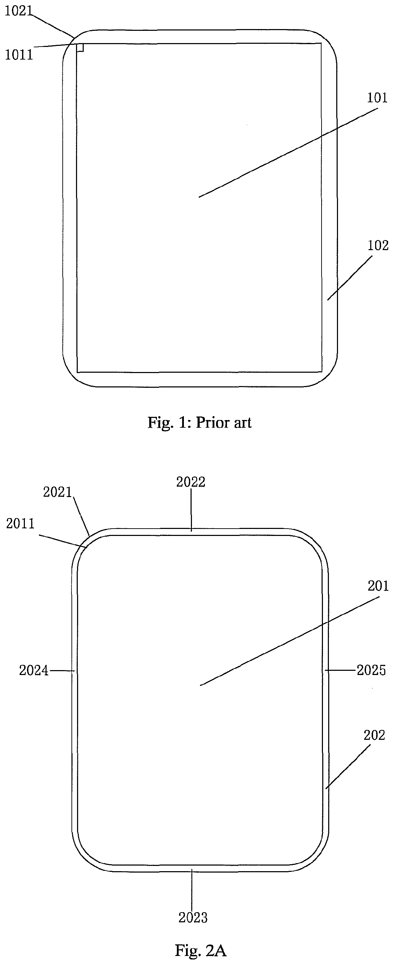

The structure of the electronic device is shown usually as Fig. 1. This electronic device includes a display screen 101 and a bezel 102 that surrounds sides of the display screen 101. The four screen corners 1011 of the display screen 101 are right-angled, and the four bezel corners 1021 of the bezel 102 are round angled. The widths of the four sides of the bezel 102 are determined by respective specified distance between vertexes of the screen corners 1011 and bezel corners 1021 corresponding to each other.

The problem existing in the known structures is the wide border.

SUMMARY

In order to solve the problems in the related arts, the present invention provides an electronic device and a display method. The technical solutions may be as follows.

According to a first aspect of embodiments of the present invention, an electronic device is provided. The electronic device at least includes: a display screen and a bezel, in which the bezel surrounds sides of the display screen;
the display screen has four screen corners, and the four screen corners are rounded;
the bezel has four sides, any one of the four sides intersects two of further three sides of the four sides respectively and is in parallel with another one of the further three sides to form four bezel corners;
the four bezel corners correspond to the four screen corners respectively, and the four bezel corners are rounded;
a distance between vertexes of the bezel corners and screen corners corresponding to each other is not less than a preset distance.

According to a particular embodiment, a curvature of each of the four screen corners is equal to a curvature of each of the four bezel corners.

According to a particular embodiment, a central angle corresponding to each of the four screen corners is equal to a central angle corresponding to each of the four bezel corners.

According to a particular embodiment, the display screen is a liquid crystal display screen.

According to a particular embodiment, original right-angle corners of the display screen are cut into arc shapes respectively to form the four screen corners.

According to a second aspect of embodiments of the present invention, a display method is provided. The method is performed by the electronic device according to the first aspect of embodiments of the present invention and includes:

acquiring a preset floating layer including a first portion and a second portion, in which the first portion is black, the second portion is transparent, a dividing line between the first portion and the second portion is an arc-shaped smooth curve;
when a page is displayed, displaying the preset floating layer on a top of the page so that the first portion shades the page displayed on edges of the four screen corners of the display screen.

According to a particular embodiment, when a page is displayed, displaying the preset floating layer on a top of the page includes:

when the page is displayed, controlling pixels corresponding to the first portion on the display screen to be black.

According to a particular embodiment, the dividing line is located at the inner side of the edges of the rounded screen corners of the display screen.

According to a particular embodiment, a length of the preset floating layer is equal to a length of the display screen and a width of the preset floating layer is equal to a width of the display screen.

The technical solutions provided in embodiments of the present invention may have following advantageous effects.

With the electronic device and method provided by the embodiments, by setting the four screen corners of the display screen and the four bezel corners of the bezel to be the rounded corners, the vertexes of the four screen corners are closer to the center of the display screen under a condition that the size of the display screen is constant, and the widths of the four sides of the bezel can be reduced under a condition that the specific distance between the vertexes of the bezel corners and screen corners corresponding to each other is not less than the preset distance, therefore narrowing the bezel of the electronic device.

It is to be understood that both the foregoing general description and the following detailed description are exemplary and explanatory only and are not restrictive of the present invention.

**BRIEF DESCRIPTION OF THE DRAWINGS**

Accompanying drawings herein are incorporated in and constitute a part of the specification, and illustrate exemplary embodiments in line with the present disclosure, and serve to explain the principle of the present disclosure together with the description.

Fig. 1 is a schematic diagram illustrating a structure of an electronic device according to the related arts.

Fig. 2A is a schematic diagram illustrating a structure of an electronic device according to an example embodiment of the present disclosure;

Fig. 2B is a schematic diagram illustrating a rounded corner according to an example embodiment of the present disclosure;

Fig. 2C is a schematic diagram illustrating a structure of an electronic device according to an example embodiment of the present disclosure;

Fig. 2D is a schematic diagram illustrating a specific distance according to an example embodiment of the present disclosure;

Fig. 2E is a schematic diagram illustrating an arc curvature according to an example embodiment of the present disclosure;

Fig. 2F is a schematic diagram illustrating a central angle according to an example embodiment of the present disclosure;

Fig. 2G is a schematic diagram illustrating a central angle according to an example embodiment of the present disclosure;

Fig. 3A is a flow chart showing a display method according to an example embodiment of the present disclosure;

Fig. 3B is a schematic diagram illustrating a struture of an electronic device according to an example embodiment of the present disclosure;

Fig. 3C is a schematic diagram illustrating a dividing line according to an example embodiment of the present disclosure;

Fig. 3D is a schematic diagram illustrating a display according to an example embodiment of the present disclosure; and

Fig. 4 is a block diagram illustrating an electronic device according to an example embodiment of the present disclosure.

**DETAILED DESCRIPTION**

In order to make objectives, technical solutions and advantages of the present disclosure clearer, in the following the embodiments of the present disclosure will be described in detail with reference to drawings. Herein, the illustrative embodiments of the present disclosure and their description are intended to be illustrative of the present disclosure and are not to be construed as limiting the present disclosure.

The embodiments of the present disclosure provide an electronic device and a method for displaying, which will be described in detail below with reference to the drawings.

Fig. 2A is a schematic diagram illustrating a structure of an electronic device according to an example embodiment of the present disclosure. As shown in Fig. 2A, the electronic device at least includes a display screen 201 and a bezel 202. The bezel 202 surrounds sides of the display screen 201. The display screen 201 has four screen corners 2011, and the four screen corners 2011 are rounded. The bezel 202 has four sides. Any one of the four sides intersects two of another three sides of the four sides respectively and is in parallel with a further side of another three sides of the four sides to form four bezel corners 2021. The four bezel corners 2021 correspond to the four screen corners 2011 respectively, and the four bezel corners 2021 are rounded.

The four sides include a first side 2022, a second side 2023, a third side 2024 and a fourth side 2025. The first side 2022 is in parallel with the second side 2023. The third side 2024 is in parallel with the fourth side 2025. The first side 2022 intersects the third side 2024 and the fourth side 2025 respectively. The second side 2023 intersects the third side 2024 and the fourth side 2025 respectively.

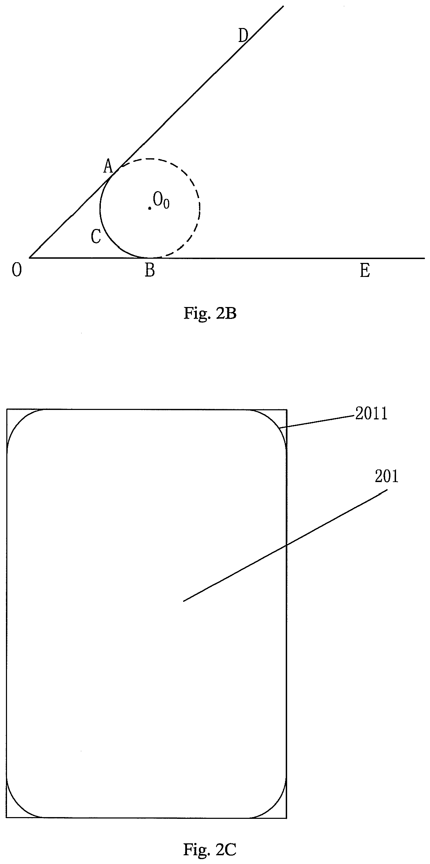

The rounded corner refers to an arc-shaped corner formed by replacing the original angle of the corner with an arc tangent to the two sides of the original angle of the corner. As shown in Fig. 2B, O is a vertex of an angle $\angle$ AOB, and lines OD and OE are two sides of the angle $\angle$ AOB. An arc $\overset{\frown}{ACB}$ is tangent to lines AD and BE. n Tangent points are points A and B. Therefore, the arc $\overset{\frown}{ACB}$, and the lines AD and BE forms a rounded corner.

Original right-angle corners of the display screen 201 are cut into arc shapes respectively to form the four screen corners 2011. As shown in Fig. 2C, the display screen 201 has four right-angled corners originally. The four rounded corners 2011 are formed by cutting the four right-angled corners based on the arcs shown in Fig. 2C.

In addition, the process of cutting the display screen may be various, including a laser cutting process, a water cutting process, and the like, and this embodiment is not limited thereto.

As shown in Fig. 2A, the four screen corners 2011 correspond to the four bezel corners 2021 respectively, which specifically refers to that: an upper left corner of the display screen 201 corresponds to an upper left corner of the bezel 202, a lower left corner of the display screen 201 corresponds to a lower left corner of the bezel 202, an upper right corner of the display screen 201 corresponds to an upper right corner of the bezel 202, and a lower right corner of the display screen 201 corresponds to a lower right corner of the bezel 202.

In an embodiment of the present disclosure, a distance between vertexes of the screen corners 2011 and bezel corners 2021 corresponding to each other is not less than a preset distance.

The preset distance refers a minimum distance capable of protecting the screen centers adequately. It could be considered that when the distance between the vertexes is less than the preset distance, the width of the bezel outside of the screen corners is too small, such that the screen corners are susceptible to have abrasion.

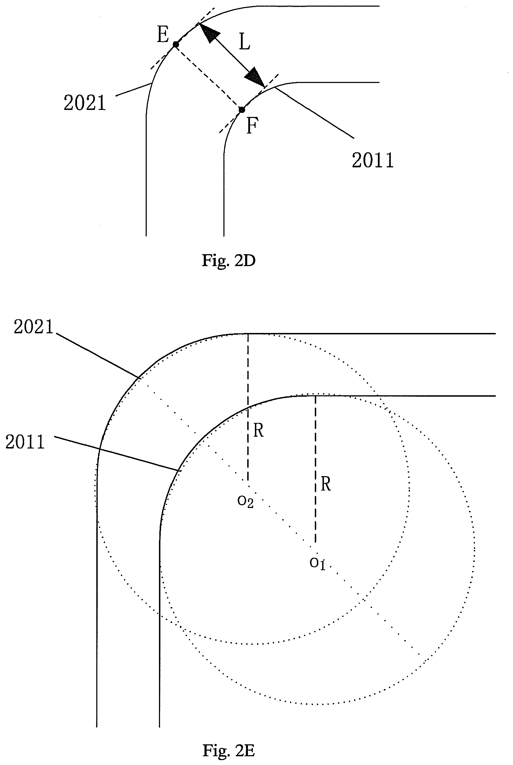

The vertex of the rounded corner refers to a midpoint of the arc for forming the rounded corner, i.e. a point on the arc and with the same distance from the two ends of the arc. Taking the upper left corner as an example, an enlarged view of the screen corner 2011 and the bezel corner 2021 is shown in Fig. 2D. Points E and F are the vertexes of the bezel corner 2021 and the screen corner 2011, respectively. A distance L between the two vertices E and F is a specified distance which is not less than the preset distance.

In the related arts, the four screen corners of the display screen are all right-angled corners, the four bezel corners of the bezel are rounded corners, and the widths of the four sides of the bezel are determined by the respective specified distance between the vertexes of the screen corners and bezel corners corresponding to each other. However, in order to adequately protect each screen angle, each specified distance should not be less than the preset distance, which causes that the widths of the four sides of the bezel cannot be reduced unrestrictedly.

In the embodiment, the four screen corners 2011 of the display screen 201 are set to be rounded so that the vertices of the four screen corners 2011 are closer to the center of the display screen 201 while the size of the display screen 201 is guaranteed to be constant. Even if the widths of the four sides of the bezel are reduced, it is ensured that the specified distance between the vertex of the corresponding screen corner 2011 and the vertex of the corresponding bezel corner 2021 is not less than the preset distance, and the effect of protecting the display screen 201 may also be achieved.

It should be noted that the electronic device may be a smart phone, a television, a tablet, and the like, and the embodiment is not limited thereto.

With the electronic device provided by the embodiments, by setting the four screen corners of the display screen and the four bezel corners of the bezel to be the rounded corners, the vertexes of the four screen corners 2011 are closer to the center of the display screen 201 under a condition that the size of the display screen is constant, and the widths of the four sides of the bezel can be reduced under a condition that the specific distance between the vertexes of the bezel corners and screen corners corresponding to each other is not less than the preset distance, therefore narrowing the bezel of the electronic device. In addition, by configuring the rounded screen corners and the narrow bezel, the aesthetics of electronic equipment is enhanced greatly.

In a possible implementation, in order to enhance the aesthetics of electronic equipment, a curvature of each of the four screen corners 2011 is equal to a curvature of each of the four bezel corners 2021.

The curvature is configured to indicate a degree of bending of the arc. The greater the curvature, the greater the degree of bending of the arc is. The curvature of the arc is inversely proportional to the radius of the arc. In order to ensure that the curvature of a screen corner 2011 is equal to the curvature of a bezel corner 2021, it is needed to ensure the radius of an arc of the screen corner 2011 is equal to the radius of an arc of the bezel corner 2021.

As shown in Fig. 2E, O1 is a center of a circle for the arc of the screen corner 2011 and 02 is a center of a circle for the arc of the bezel corner 2021. The radiuses for the arc of the screen corner 2011 and for the arc of the bezel corner 2021 both are R0, so the curvature of the screen corner 2011 is equal to the curvature of the bezel corner 2021.

In a possible implementation, a central angle corresponding to each of the four screen corners 2011 is equal to a central angle corresponding to each of the four bezel corners 2021.

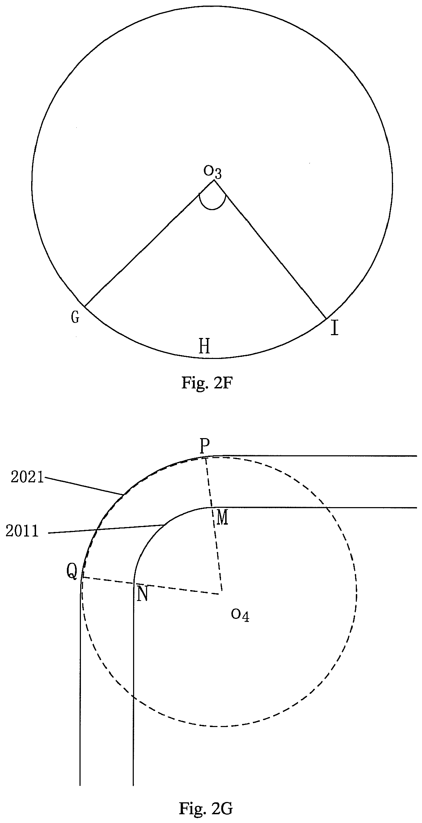

For the arc, the central angle refers to an angle having a vertex as the center of the circle for the arc and having two lines passing through two ends of the arc. As shown in Fig. 2F, an arc $\overset{\frown}{GHI}$ is on a circle 03, a point 03 is the center of the circle, and the central angle corresponding to the arc $\overset{\frown}{GHI}$ is a central angle $\angle$ G03I. The lines O3G and O3I of the central angle $\angle$ GO3I pass through two ends G and I of the n arc GHI respectively.

The central angle corresponding to each of the four screen corners 2011 is equal to the central angle corresponding to each of the four bezel corners 2021, which refers to that: the center of the circle for the arc of the corresponding screen corner 2011 is the same with the center of the circle for the arc of the corresponding bezel corner 2021, extension lines of two lines of the central angle for the corresponding screen corner 2011 are coincided with extension lines of two lines of the central angle for the corresponding bezel corner 2021 respectively. As shown in Fig. 2G, the central angle for the corresponding screen corner 2011 and the central angle for the corresponding bezel corner 2021 both are $\angle$ MO4N.

In a possible implementation, the display screen 201 is a liquid crystal display screen. The liquid crystal display screen is provided with a plurality of pixel electrodes. In cutting the liquid crystal display screen, it is not necessary to provide a pixel electrode for the portion to be cut off on the liquid crystal display screen.

Alternatively, the display screen may be another type of display screen such as a plasma display screen, which is not limited in this embodiment.

All of the above alternative implementations may be used in any combination to form alternative embodiments of the present disclosure and are not further described herein.

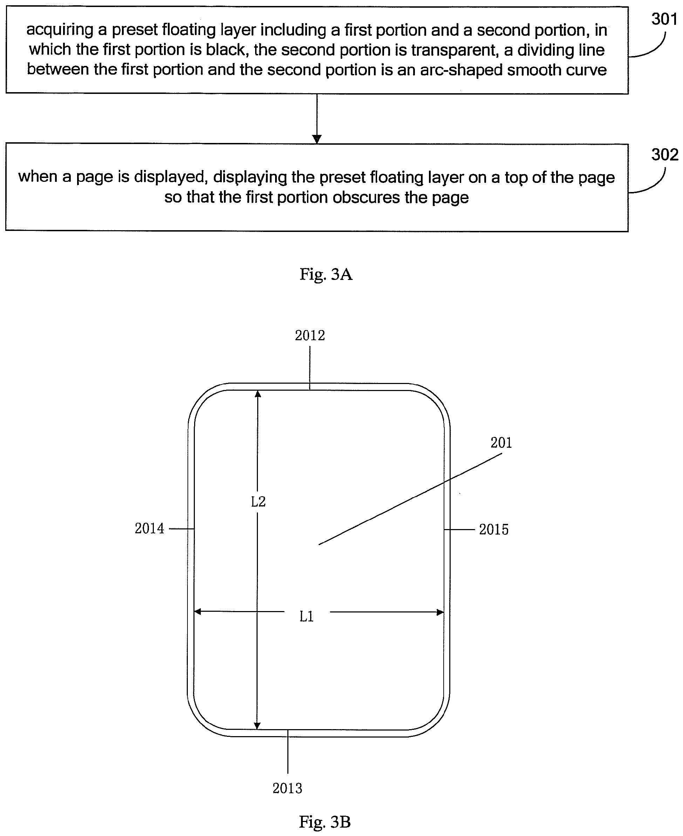

Fig. 3A is a flow chart showing a display method according to an example embodiment of the present disclosure. As shown in Fig. 3A, the method is performed by the electronic device shown in Fig. 3B and includes followings.

In step 301, a preset floating layer is acquired. The preset floating layer includes a first portion and a second portion. The first portion is black, and the second portion is transparent. A dividing line between the first portion and the second portion is an arc-shaped smooth curve.

A length of the preset floating layer is equal to a length of the display screen, and a width of the preset floating layer is equal to a width of the display screen. The length of the display screen refers to the distance between the left side and the right side of the display screen, and the width of the display screen refers to the distance between the upper side and the lower side of the display screen. As shown in Fig. 3B, the display screen 201 has a length L1 and a width L2.

The preset floating layer may be provided in the electronic device by a technician, or, the preset floating layer may be created by the electronic device. For example, the electronic device can acquire the size information of the display screen, in which the size information includes the length and the width of the display screen, the radius and the arc length of each screen corner of the display screen, and the like; and then the electronic device can create the preset floating layer based on the size information such that the length and the width of the preset floating layer are equal to the length and the width of the display screen respectively, and divides the preset floating layer into two portions according to the radius and the arc length of each screen corner, and the like, in which the first portion is set as a black floating layer, and the second portion is set as a transparent floating layer so that the dividing line of the first portion and the second portion is the arc-shaped smooth curve and is located at the inner side of edges of the display screen. So when the preset floating layer is displayed, the first portion of the preset floating layer can cover the content displayed on the edges of the display screen.

The four angles of the preset floating layer may be the right-angles or rounded angles, and this embodiment is not limited thereto.

In a possible implementation, the dividing line is located at the inner side of the edges of the rounded screen corners of the display screen.

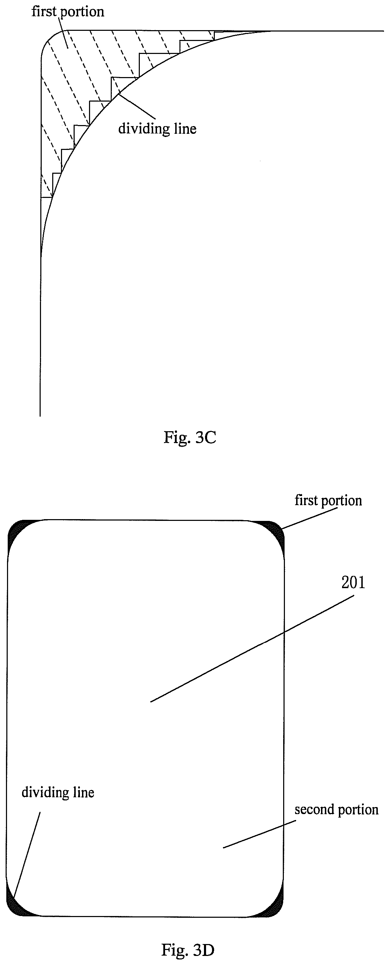

As shown in Fig. 3C, taking the upper left corner as an example, when the upper left corner of the display screen 201 is cut into the rounded corner from the right-angled corner, the edge of the upper left corner is not smooth due to a limitation of the cutting process, such that a plurality of pixels on the edge of the upper left corner are formed as serrated. The edge of the page displayed may be not smooth when the display is performed by the display screen 201, affecting the user's observation. The dividing line between the first portion (denoted by the dotted line) and the second portion of the preset floating layer as shown in Fig. 3C is located at the inner side of the serrated edges of the display screen. When the display screen displays the page, the first portion may obscure the content displayed at the serrated edges.

In step 302, when a page is displayed, the preset floating layer is displayed on a top of the page so that the first portion shades the page.

The preset floating layer can be set on the top by the electronic device. When the electronic device displays any page any time, the preset floating layer may be shown on the top of the page, thus ensuring that the first portion of the floating layer covers the region overlapped with the first portion on the page but does not cover the region overlapped with the second portion. The user can only see the region overlapped with the second portion when viewing the page, and the edges of this region are smooth.

As shown in Fig. 3D, the black region is the first portion, which can cover the saw-teeth at the rounded corners of the display screen as shown in Fig. 3C. The page saw by the user is located at the region of the second portion when the page is displayed, i.e. the region within the dividing line. The boundary of this region is the smooth curve, and the boundary of the page displayed to the user is also smooth.

When the page is displayed, the electronic device controls the pixels corresponding to first portion on the display screen to be black.

Since the size of the preset floating layer is in the accordance with the size of the display screen, and the preset floating layer and the display screen can correspond to each other, a part of the pixels on the display screen will correspond to the first portion and another part of the pixels on the display screen will correspond to the second portion. The pixels corresponding to the first portion on the display screen are located at the outer side of the dividing line of the preset floating layer.

In the embodiment, in order to ensure that the first portion obscures the displayed page, in actual operation, the electronic device can control the pixels corresponding to the first portion on the display screen to be black, that is, to control the brightness of these pixels to be 0, so as to achieve the effect of blocking the page displayed on the edges of the four screen corners.

With the method provided in embodiments, the preset floating layer is acquired, in which the preset floating layer includes the first portion and the second portion, the first portion is the black floating layer, the second portion is the transparent floating layer, and the dividing line of the black floating layer and the transparent floating layer is the arc-shaped smooth curve; and the preset floating layer is displayed on the top of the page when the page is displayed, the black floating layer of the preset floating layer will block the rounded corners of the page and the not-smooth part on the displayed page is covered, so that the rounded corners on the page become smooth and the display effect is improved.

The edges of the display screen in the electronic device shown in Fig. 3A are not smooth. The screen corners after being cut are very rough due to the limitation of the cutting process when the four original right-angled corners are cut into the rounded corners. The pixels at the edges are box-shaped, resulting in the edges of the display screen are serrated and not smooth. When the page is to be displayed, the serrated edges of the display screen will be displayed, which will give the user a bad visual effect.

In order to eliminate the non-smoothness of the edges caused by the limitation of the cutting process, in the present embodiment, the preset floating layer is displayed on the top of the page, the preset floating layer is divided into two parts, one part is the black floating layer configured to hide a part on the page where the edges are not smooth, another part is the transparent floating layer configured to display the page, and the dividing line between the black floating layer and the transparent floating layer is the smooth curve, so the region overlapped with the second portion on the page may be displayed to the user and the edges of this region are smooth, thus solving the problem that the edges of the displayed page are not smooth.

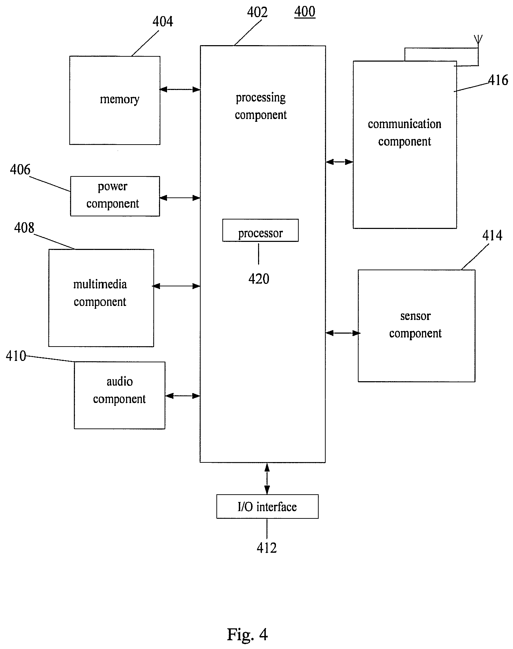

Fig. 4 is a block diagram illustrating an electronic device 400 according to an exemplary embodiment of the present disclosure. For example, the electronic device 400 may be a mobile phone, a computer, a digital broadcasting terminal, a messaging device, a game console, a tablet device, a medical device, fitness equipment, a Personal Digital Assistant PDA, and the like

Referring to Fig. 4, the electronic device 400 may include the following one or more components: a processing component 402, a memory 404, a power component 406, a multimedia component 408, an audio component 410, an Input/Output (I/O) interface 412, a sensor component 414, and a communication component 416.

The processing component 402 typically controls overall operations of the electronic device 400, such as the operations associated with display, telephone calls, data communications, camera operations, and recording operations. The processing component 402 may include one or more processors 420 to execute instructions to perform all or part of the steps in the above described methods. Moreover, the processing component 402 may include one or more modules which facilitate the interaction between the processing component 402 and other components. For instance, the processing component 402 may include a multimedia module to facilitate the interaction between the multimedia component 408 and the processing component 402.

The memory 404 is configured to store various types of data to support the operation of the electronic device 400. Examples of such data include instructions for any applications or methods operated on the electronic device 400, contact data, phonebook data, messages, pictures, video, etc. The memory 404 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 406 provides power to various components of the electronic device 400. The power component 406 may include a power management system, one or more power sources, and any other components associated with the generation, management, and distribution of power in the electronic device 400.

The multimedia component 408 includes a screen providing an output interface between the electronic device 400 and the user, and the four corner of the screen are rounded. In some embodiments, the screen may include a liquid crystal display (LCD) and a press panel (TP). If the screen includes the press panel, the screen may be implemented as a press screen to receive input signals from the user. The press panel includes one or more press sensors to sense presses, swipes, and other gestures on the press panel. The press sensors may not only sense a boundary of a press or swipe action, but also sense a duration time and a pressure associated with the press or swipe action. In some embodiments, the multimedia component 408 includes a front camera and/or a rear camera. The front camera and/or the rear camera may receive external multimedia data while the electronic device 400 is in an operation mode, such as a photographing mode or a video mode. Each of the front camera and the rear camera may be a fixed optical lens system or have focus and optical zoom capability.

The audio component 410 is configured to output and/or input audio signals. For example, the audio component 410 includes a microphone (MIC) configured to receive an external audio signal when the electronic device 400 is in an operation mode, such as a call mode, a recording mode, and a voice recognition mode. The received audio signal may be further stored in the memory 404 or transmitted via the communication component 416. In some embodiments, the audio component 410 further includes a speaker to output audio signals.

The I/O interface 412 provides an interface for the processing component 402 and peripheral interface modules, such as a keyboard, a click wheel, buttons, and the like. The buttons may include, but are not limited to, a home button, a volume button, a starting button, and a locking button.

The sensor component 414 includes one or more sensors to provide status assessments of various aspects of the electronic device 400. For instance, the sensor component 414 may detect an open/closed status of the electronic device 400 and relative positioning of components (e.g. the display and the keypad of the electronic device 400. The sensor component 414 may also detect a change in position of the electronic device 400 or of a component in the electronic device 400, a presence or absence of user contact with the electronic device 400, an orientation or an acceleration/deceleration of the electronic device 400, and a change in temperature of the electronic device 400. The sensor component 414 may include a proximity sensor configured to detect the presence of nearby objects without any physical contact. The sensor component 414 may also include a light sensor, such as a CMOS or CCD image sensor, for use in imaging applications. In some embodiments, the sensor component 414 may also include an accelerometer sensor, a gyroscope sensor, a magnetic sensor, a pressure sensor, or a temperature sensor.

The communication component 416 is configured to facilitate wired or wireless communication between the electronic device 400 and other devices. The electronic device 400 can access a wireless network based on a communication standard, such as WIFI, 2G, or 3G, or a combination thereof. In one exemplary embodiment, the communication component 416 receives a broadcast signal or broadcast associated information from an external broadcast management system via a broadcast channel. In one exemplary embodiment, the communication component 416 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the electronic device 400 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer readable storage medium including instructions, such as the memory 404 including instructions. The instructions may be performed by the processor 420 of the electronic device 400 so as to realize the method for generating information. For example, the non-transitory computer-readable storage medium may be a ROM, a RAM, a CD-ROM, a magnetic tape, a floppy disc, an optical data storage device, and the like.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the present disclosure as come within known or customary practice in the art.

**Claims**

1. An electronic device, at least comprising a display screen (201) and a bezel (202), wherein the bezel (202) surrounds sides of the display screen (201); the display screen (201) has four screen corners (2011), and the four screen corners (2011) are rounded; the bezel (202) has four sides (2022; 2023; 2024; 2025), any one of the four sides (2022; 2023; 2024; 2025) intersects two of further three sides of the four sides (2022; 2023; 2024; 2025) respectively and is in parallel with another one of the further three sides to form four bezel corners (2021); the four bezel corners (2021) correspond to the four screen corners (2011) respectively, and the four bezel corners (2021) are rounded; a distance (L) between vertexes (E; F) of the bezel corners (2021) and screen corners (2011) corresponding to each other is not less than a preset distance.

2. The electronic device according to claim 1, wherein a curvature of each of the four screen corners (2011) is equal to a curvature of each the four bezel corners (2021).

3. The electronic device according to claim 1, wherein a central angle corresponding to each of the four screen corners (2011) is equal to a central angle corresponding to each of the four bezel corners (2021).

4. The electronic device according to claim 1, wherein the display screen is a liquid crystal display screen.

5. The electronic device according to any one of claims 1 to 4, wherein original right-angle corners of the display screen are cut into arc shapes respectively to form the four screen corners (2011).

6. The electronic device according to claim 5 when based on claim 4, wherein the liquid crystal display screen is provided with a plurality of pixel electrodes, and there is no pixel electrode on a part to be cut off of the liquid crystal display screen.

7. The electronic device according to any of claims 5-6, wherein original right-angle corners of the display screen are cut by a cutting process selected from a group consisting of: a laser cutting process and a water cutting process.

8. A display method, wherein the method is performed by the electronic device according to any one of claims 1 to 7 and comprises:

acquiring (301) a preset floating layer comprising a first portion and a second portion, wherein the first portion is black, the second portion is transparent, a dividing line between the first portion and the second portion is an arc-shaped smooth curve;
when a page is displayed, displaying (302) the preset floating layer on a top of the page so that the first portion shades the page displayed on edges of the four screen corners of the display screen.

9. The method according to claim 8, further comprising:

creating the preset floating layer according to size information of the display screen.

10. The method according to claim 9, wherein the size information comprises: a length of the display screen, a width of the display screen, a radius of each screen corner of the display screen and a length of an arc of each screen corner of the display screen.

11. The method according to claim 8, wherein when a page is displayed, displaying (302) the preset floating layer on a top of the page comprises:

when the page is displayed, controlling pixels corresponding to the first portion on the display screen to be black.

12. The method according to claim 11, wherein controlling pixels corresponding to the first portion on the display screen to be black comprises:

controlling brightness values of the pixels to be zero.

13. The method according to claim 8, wherein the dividing line is located at the inner side of the edges of the rounded screen corners of the display screen.

14. The method according to claim 8, wherein a length of the preset floating layer is equal to a length of the display screen and a width of the preset floating layer is equal to a width of the display screen.

15. A computer readable storage medium, comprising a computer program for executing a display method according to any of claims 8-14.

Fig. 1: Prior art

Fig. 2A

Fig. 2B

Fig. 2C

E

L

2021

F

2011

Fig. 2D

2021

2011

R

$o_2$

R

$o_1$

Fig. 2E

Fig. 2F

Fig. 2G

acquiring a preset floating layer including a first portion and a second portion, in which the first portion is black, the second portion is transparent, a dividing line between the first portion and the second portion is an arc-shaped smooth curve

301

when a page is displayed, displaying the preset floating layer on a top of the page so that the first portion obscures the page

302

Fig. 3A

2012

L2

2014

201

2015

L1

2013

Fig. 3B

first portion

dividing line

Fig. 3C

first portion

201

dividing line

second portion

Fig. 3D

Fig. 4

Europäisches
Patentamt

European
Patent Office

Office européen
des brevets

# EUROPEAN SEARCH REPORT

Application Number

EP 17 17 3523

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/211707 A1 (WATANABE HISASHI [JP]) 30 July 2015 (2015-07-30) * paragraph [0013] - paragraph [0025] * * paragraph [0046] - paragraph [0048] * * paragraph [0058] - paragraph [0105] * * paragraph [0115] * * figures 1, 3-11 * | 1-15 | INV. G06F1/16 H04M1/02 |
| X | US 2014/139771 A1 (CHOI JAE YI [KR]) 22 May 2014 (2014-05-22) * paragraph [0009] - paragraph [0015] * * paragraph [0038] - paragraph [0048] * * paragraph [0065] * * paragraph [0070] - paragraph [0075] * * figures 2-6 * | 1-15 | |
| A | Gadget Hacks: "How to Get Rounded Screen Corners on a Samsung Galaxy S3", , 23 May 2013 (2013-05-23), XP054977863, Retrieved from the Internet: URL:https://www.youtube.com/watch?v=PTNKU1jvEyw [retrieved on 2017-11-10] * the whole document * | 8-15 | |

|  | TECHNICAL FIELDS SEARCHED (IPC) |
|---|---|
|  | G06F H04M |

The present search report has been drawn up for all claims

| Place of search | Date of completion of the search | Examiner |
|---|---|---|
| The Hague | 13 November 2017 | Knutsson, Frédéric |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 17 3523

This annex lists the patent family members relating to the patent documents cited in  the above-mentioned European search report.
The members are as contained in the European Patent Office EDP file on
The European Patent Office is in no way liable for these particulars which are merely given for the purpose of information.

13-11-2017

| Patent document cited in search report | | Publication date | Patent family member(s) | | | Publication date |
|---|---|---|---|---|---|---|
| US 2015211707 | A1 | 30-07-2015 | CN | 104428828 | A | 18-03-2015 |
| | | | JP | WO2014010463 | A1 | 23-06-2016 |
| | | | US | 2015211707 | A1 | 30-07-2015 |
| | | | WO | 2014010463 | A1 | 16-01-2014 |
| US 2014139771 | A1 | 22-05-2014 | CN | 103823314 | A | 28-05-2014 |
| | | | EP | 2733528 | A1 | 21-05-2014 |
| | | | KR | 20140064127 | A | 28-05-2014 |
| | | | US | 2014139771 | A1 | 22-05-2014 |

EPO FORM P0459

For more details about this annex : see Official Journal of the European Patent Office, No. 12/82